# EUROPEAN PATENT SPECIFICATION

(11) **EP 1 833 763 B1**
(45) Date of publication and mention of the grant of the patent: **25.07.2012**
(21) Application number: 05813481.8
(22) Date of filing: 05.12.2005
(51) Int. Cl.: C01G 23/053, B01J 35/00, B01D 53/86, C03C 17/25

(54) **PROCESS FOR PREPARING DISPERSIONS OF TIO2 IN THE FORM OF NANOPARTICLES, AND DISPERSIONS OBTAINABLE WITH THIS PROCESS AND FUCTIONALIZATION OF SURFACES BY APPLICATION OF TIO2 DISPERSIONS**
VERFAHREN ZUR HERSTELLUNG VON DISPERSIONEN VON TIO2 IN FORM VON NANOPARTIKELN UND DANACH ERHÄLTLICHE DISPERSIONEN UND FUNKTIONALISIERUNG VON OBERFLÄCHEN
PROCEDE DE PREPARATION DE DISPERSIONS DE TIO2 SOUS FORME DE NANOPARTICULES, DISPERSIONS OBTENUES A L'AIDE DU PROCEDE ET FONCTIONNALISATION DE SURFACES PAR L'APPLICATION DE DISPERSIONS DE TIO2

(30) Priority: 06.12.2004 IT FI20040025
(43) Date of publication of application: 19.09.2007
(73) Proprietor: Colorobbia Italia S.p.a., 50053 Sovigliana Vinci (Firenze) (IT)
(72) Inventor: BALDI, Giovanni, I-50025 MONTESPERTOLI (IT); BITOSSI, Marco, I-50056 MONTELUPO FIORENTINO (IT); BARZANTI, Andrea, I-50056 MONTELUPO FIORENTINO (IT)
(74) Representative: Gervasi, Gemma
(86) International application number: PCT/EP2005/056478
(87) International publication number: WO 2006/061367

(56) References cited:
- EP-A- 0 770 579
- WO-A-99/62822
- C. FELDMANN: "Polyol-Mediated Synthesis of Nanoscale Functional Materials" ADVANCED FUNCTIONAL MATERIALS, vol. 13, no. 2, 2003, pages 101-107, XP002342330
- PATENT ABSTRACTS OF JAPAN vol. 2000, no. 02, 29 February 2000 (2000-02-29) & JP 11 322338 A (NOEVIR CO LTD), 24 November 1999 (1999-11-24)
- PATENT ABSTRACTS OF JAPAN vol. 2003, no. 08, 6 August 2003 (2003-08-06) & JP 2003 119024 A (ABE MASAHIKO; SAKAI HIDEKI; NIPPON BORON:KK), 23 April 2003 (2003-04-23)

## Description

### Field of the invention

The present invention relates to the field of processes for preparing compounds in the form of nanometric particles, and in particular regards a process for preparing dispersions of TiO₂ in the form of nanoparticles.

### State of the art

Titanium dioxide is used as a white pigment of good covering power in particular in paint and in the production of paper and synthetic rubber. More recent applications of titanium dioxide are those that exploit its photocatalytic activity, i.e. its capacity to generate, by the action of ultra-violet light, radical species able to catalyse the oxidative degradation of noxious or toxic substances such as benzene, dioxane and other organic pollutants, and also of unpleasant and infectious substances such as moulds and bacteria. These applications extend from the fight against pollutants in the environmental field, to the field of cleaning and sterilizing.

For said applications titanium dioxide is used as a coating on surfaces to be treated, so as to maximize the photocatalytic effect. The crystalline form of titanium dioxide, namely anatase, is preferred for this type of application because, in addition to being chemically stable and easily available, it also has a greater photocatalytic activity than the other two crystalline forms, rutile and brookite.

On the other hand, the overlap of the titanium dioxide absorption spectrum with the solar spectrum is not very great even in its anatase form, indicating a low photocatalytic efficiency. Various attempts have therefore been made to modify TiO₂, for example by doping it with other metals or preparing the compound in question in the form of nanoparticles; in this manner, the surface area and therefore photocatalytic efficiency are vastly increased.

Various processes for preparing anatase TiO₂ are known, even in nanoparticulate form, but as far as the applicant is aware all these processes lead to powdered TiO₂ being obtained.

A process for preparing a suspension of nanoparticles in high boiling point alcohol is the polyol process described for example in C. Feldmann "Polyol mediated synthesis of nanoscale functional materials" which allows the obtaining of suspensions very stable for a long time but, contrary to the presently claimed process, it uses mineral acid as inhibitor of polycondensation (see also in this connection WO 99/62822). C. Feldmann, Adv. Funct. Mater. 2003, 13(2), 101-107 describes suspensions of nanometric particles of Ti02 in glycol under acid conditions.

In EP 770 579 a modified titanium oxide sol obtained by treating an aqueous titanium oxide sol with a compound having a phase transfer activity is described. To be usable for preparing photocatalytic coatings this powdery material must be dispersed in a suitable solvent and possibly formulated with additives to improve coating adhesion. However, this causes the titanium dioxide particles to coagulate, making it impossible to maintain the activity and photocatalytic efficiency of the particulate material. Moreover, over time the TiO₂ particles in these dispersions tend to sink to the bottom of the containers in which they are stored, giving rise to stability problems during storage.

The need is therefore felt for providing a process which enables stable nanoparticulate dispersions of titanium dioxide in the anatase form to be prepared.

### Summary of the invention

The applicant has now devised a process by which nanoparticulate TiO₂ in the anatase form and already dispersed in suitable solvents is obtained, it being directly usable for preparing photocatalytic coatings. The dispersions obtained with the process of the invention have not led to particle coagulation phenomena even after prolonged storage, allowing coatings to be prepared that maintain the photocatalytic activity of the particulate material by virtue of dispersion homogeneity.

The present invention therefore provides a process for preparing nanoparticulate dispersions of anatase TiO₂ in a mixture of water and a suitable complexing solvent, comprising the following steps:
i) reacting a titanium alkoxide with a suitable complexing solvent;
ii) distilling the solution derived from step i);
iii) adding water to the solution derived from step ii) together with said complexing solvent and one or more polycondensation inhibitors, then heating the reaction mixture under reflux, to obtain the desired nanoparticulate dispersion.

Another process to obtain nanoparticle suspensions of titanium dioxide, TiO₂, is the aqueous hydrolysis of titanium alkoxides such as titanium methoxide, ethoxide, normal-propoxide, isopropoxide, normal-butoxide, and isobutoxide. The titanium isopropoxide is preferred for the same reasons previously described.

Titanium isopropoxide is added to a hot water solution containing mineral acid (such as hydrochloridric or nitric acid) and a non-ionic surfactant (such as Triton X-100). The hydrolysis process is maintaining to reflux for 24 hours.

The invention also provides nanoparticulate dispersions of anatase TiO₂ in a mixture of water and a suitable complexing solvent, obtainable with the aforesaid process, and their use for preparing photocatalytic surface coatings for antibacterial action, photocatalytic decontamination of gas and liquids, and for preparing cosmetic formulations which protect the skin against sunlight.

The characteristics and advantages of the invention will be illustrated in detail in the following description.

### BRIEF DESCRIPTION OF THE FIGURES

Figure 1 shows the diffractogram attained from XRD analysis of the product obtained in example 1, after drying it at 200°C for 12 hours.
Figure 2 shows a TEM photo of TiO₂ nanoparticles (90000x).

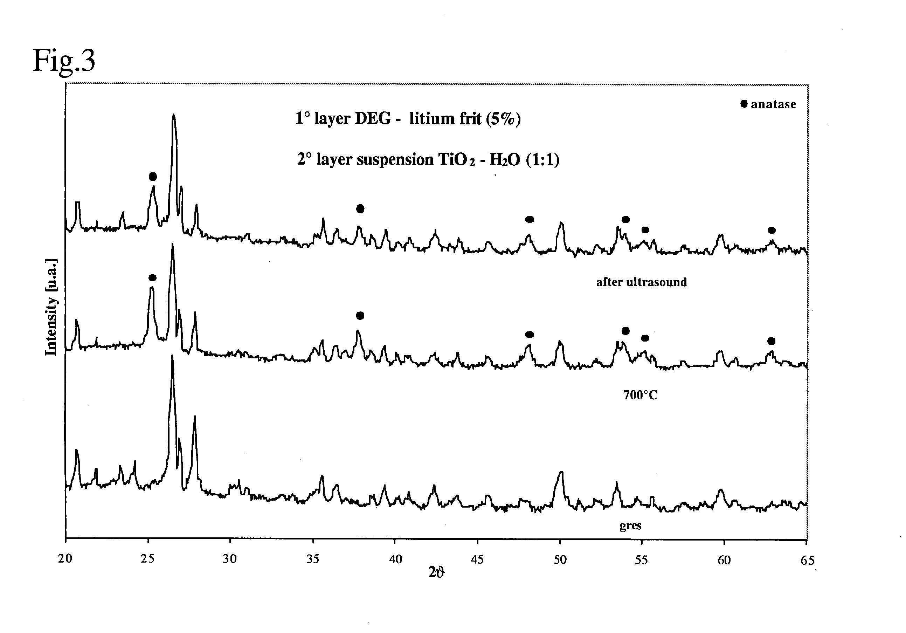

Figure 3 shows the diffractogram attained from XRD analysis of the product obtained in example 8.

### Detailed description of the invention

With the process of the invention, the formation of TiO₂ in anatase form takes place directly in the water/complexing solvent mixture used in step i), obtaining at the end of the process a dispersion of TiO₂ particles between 3 and 20 nm in size. Particle size measurement was undertaken with different techniques well known to the expert of the art, such as XRD (X-ray diffraction), FEG-SEM (Field Emission Gun - Scanning Electron Microscopy), TEM (Transmission Electron Microscopy) and DLS (Dynamic Light Scattering). These dispersions, in contrast to those prepared by dispersing nanometric powers in solvent mixtures, exhibit neither agglomerate formation nor coagulation and precipitation phenomena, even after prolonged storage of the dispersion.

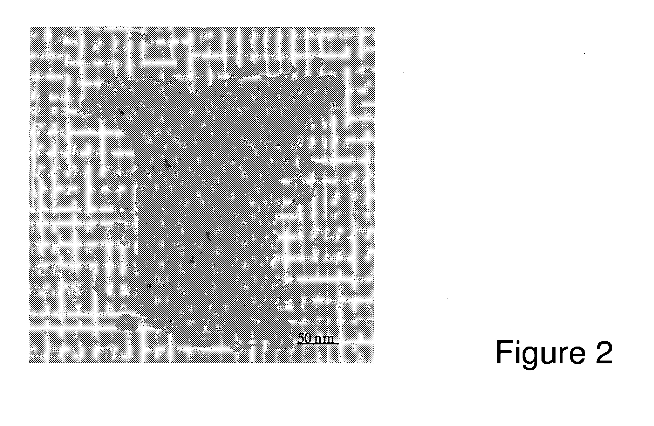

The advantages of dispersions of this type are evident, and related to the uniformity and photocatalytic effectiveness of the coatings which can be prepared therewith. The polydispersion index of the dispersions obtainable with the process of the invention, measured by the DLS (Dynamic Light Scattering) technique, is less than 0.3, hence differentiating the dispersions of the invention from those obtainable with the traditional method of preparing the nanoparticulate powder and then dispersing it in solvent. A typical TEM image of our nanoparticles dispersion is shown in Fig.2. The titanium alkoxide used as the starting product in the present process can be chosen for example from the group consisting of titanium methoxide, ethoxide, normal-propoxide, isopropoxide, normal-butoxide, and isobutoxide.

Among these products, titanium isopropoxide is the preferred starting compound in the present process for various reasons. Among the titanium compounds that can be used it is the least expensive and the one which has the best reactivity under the conditions of the present process; moreover, its use leads to isopropyl alcohol being obtained as by-product of step ii), a product easily recoverable from the process of the invention and valued for its wide usage in the detergent industry.

The complexing solvents typically used in the present process are ethylenglycol, diethylenglycol and polyethylene glycols, having molecular weights for example of between 200 and 600. Longer chain polyethylene glycols of molecular weight up to 10,000 can also be used. In this case, at the end of the process and after cooling, instead of a TiO₂ dispersion in a liquid, nanoparticles of TiO₂ are obtained dispersed in a solid matrix. The final product preserves the nanometric dimensions of TiO₂ and the low polydispersion index observed for liquid dispersions. The preferred complexing solvent is diethylene glycol.

Excellent results have been obtained by conducting reaction step i) using titanium isopropoxide and diethylene glycol in a 1:3 molar ratio.

Within the scope of the present invention, the term "polycondensation inhibitor" means typically a mixture comprising at least one mineral acid and one organic acid, where the mineral acid can be chosen for example from the group consisting of hydrochloric acid, nitric acid, sulfuric acid, perchloric acid, hydrobromic acid, and hydroiodic acid, and the organic acid is preferably acetic acid.

In accordance with a particularly preferred embodiment of the present process, the polycondensation inhibitor is a mixture of hydrochloric acid and acetic acid.

The quantity of polycondensation inhibitor added is such that the quantity of the mineral acid is between 0.1 and 10% by volume on the total volume of the reaction mixture, while the quantity of the organic acid is between 1 and 20% by volume on the total volume of the reaction mixture.

The water/complexing solvent mixture used in accordance with the invention also enables the dispersion to be used directly for preparing photocatalytic coatings practically for any type of application, even for applications in the cosmetic or textile fields for coating products destined for contact with the skin.

Where they are used for preparing coatings, the present dispersions can possibly be formulated with additives and diluents commonly used in the field of surface coatings such as adhesion improving agents or solvents like water or ethanol to obtain the desired dilution.

Where they are instead used to decontaminate liquid or gaseous products, the present dispersions are respectively adsorbed on a silica gel support, or on another suitable inorganic support with good adhesion characteristics such as glass, ceramic, porous ceramics, fibres, textiles and so on, which is then immersed in the liquid or placed, as such or diluted, into containers through which the gas to be purified is bubbled.

The supports onto which a surface coating prepared with the present dispersions can be applied are very varied, ranging from fibre fabrics, either on the roll or made-up, to ceramic products, to glass, metal or mirror supports and the like.

Photocatalytic activity of the surface coating in accordance with the invention is exhibited after exposing the coating itself to light at a suitable wavelength, typically less than 388 nm, to produce a surface with antibacterial, bacteriostatic and superhydrophilic properties following exposure to UV light. The TiO₂ coated supports demonstrate a complete absence of water repellance, known as super-hydrophilicity, thus rendering the TiO₂ treated surfaces self-cleaning.

Moreover, given the very small TiO₂ particle size, the present dispersions are almost transparent, thus leaving unchanged the appearance of the surface to which they are applied. Their transparency also makes them suitable for use in the cosmetic field for preparing high protection UV sun filters.

A further advantage of the present dispersions is their behaviour at high temperatures. In this respect, applying the surface coating onto ceramic supports requires high temperature treatment of the support onto which the dispersion has been applied, the present dispersions maintaining unchanged the appearance, the crystalline form of anatase and the nanoparticulate nature of the coating prior to heating.

In accordance with a particular embodiment of the present process, doping of the Ti can be achieved with a metal chosen from the transition metal group and in particular Ag, Cu or Ce by the addition of one of their salts to step i) or alternatively to step iii) of the present process. In this manner, the process will result in the formation of an Ag, Cu or Ce doped TiO₂ dispersion, able to exhibit its catalytic activity even without UV light irradiation.

Some illustrative and non-limiting examples of the invention are given hereinafter.

### EXAMPLE 1

### Preparation of nanoparticulate dispersion of anatase TiO₂ in water/diethylene glycol starting from Ti isopropoxide

5.53 litres of diethylene glycol are fed into a 20 litre flask to which are added 5.54 litres of titanium isopropoxide. The reaction mixture is maintained under agitation for 5 minutes, then heated to 120°C distilling off the isopropyl alcohol which forms, until a small volume results. 11.1 litres of diethylene glycol, 125 ml of 32-33% w/w hydrochloric acid, 2.07 litres of glacial acetic acid and 125 ml of deionised water are added. The temperature is brought to 180°C and the mixture maintained under reflux for 2 hours.

The product thus obtained was characterised as follows.

Firstly, the concentration of TiO₂ in the final product was measured using the technique of inductively coupled plasma atomic emission (ICP) in accordance with standard methodology. From this analysis the quantity of TiO₂ in the dispersion was found to be equal to 5.7% by weight on the total weight of the dispersion.

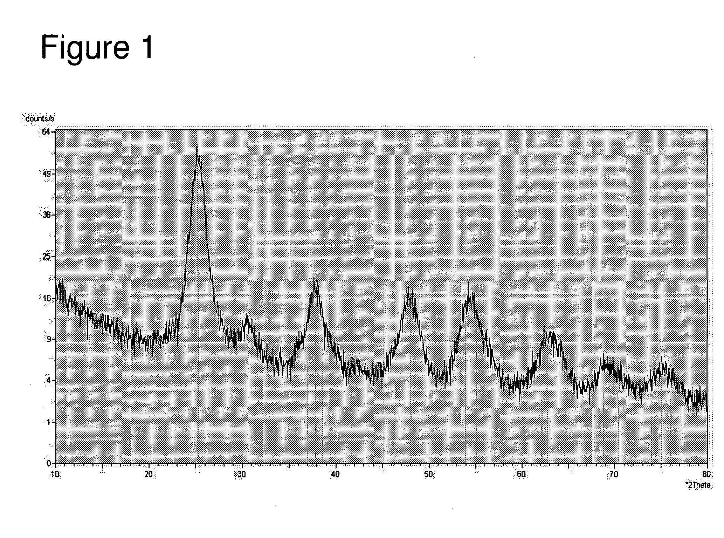

A sample of the dispersion obtained as aforedescribed was oven dried at 200°C for 12 hours until the solvent was completely evaporated. The powder thus obtained was then analysed by XRD using a Philips X'Pert PRO diffractometer, in order to understand its crystalline structure: as can be seen in figure 1, the position and the intensity of the peak shown by the diffractogram are typical of anatase.

From the diffractogram of figure 1, and in particular from the width of the principal peak, the average dimensions of the TiO₂ particles were calculated by applying Sherrer's formula, to find an average diameter value equal to 4.5 nm.

This value was also confirmed from transmission electron microscope observation on a sample of the dispersion obtained as aforedescribed, after being diluted 1:100 with ethanol.

### EXAMPLE 2

### Preparation of nanoparticulate dispersion of anatase TiO₂ in water/diethylene glycol starting from Ti ethoxide

5.53 litres of diethylene glycol were loaded into a 20 litre flask to which were added 3.76 litres of titanium ethoxide. The reaction mixture is maintained under agitation for 5 minutes, then heated to 130°C distilling away the ethanol that forms. 11.1 litres of diethylene glycol, 125 ml of 32-33% w/w hydrochloric acid, 2.07 litres of glacial acetic acid and 125 ml of deionised water are added. The temperature is brought to 180°C and the mixture maintained under reflux for 2 hours.

This product was characterised in the same manner as that given in example 1 to obtain the same crystalline phase and particles of similar dimensions. In addition the product obtained was used to carry out the same tests described above in examples 2, 3 and 4 with similar results to those obtained for the product prepared as in example 1.

### EXAMPLE 3

### Preparation of nanoparticulate dispersion of anatase TiO₂ in water starting from Ti isopropoxide

18.720 Kg of water solution obtained mixing water with 100gr of hydrochloridric acid and 80gr of a 1% w/w solution of Triton X-100 in water are fed into 20 litre flask. The reaction mixture is heated to 50°C. 1.280 Kg of titanium isopropoxide are added. The reaction mixture is manteined under reflux to 50°C for 24 hours. The product thus obtained was characterised as follows.

Firstly, the concentration of TiO₂ in the final product was measured using the technique of inductively coupled plasma atomic emission (ICP) in accordance with standard methodology. From this analysis the quantity of TiO₂ in the dispersion was found to be equal to 1.8% by weight on the total weight of the dispersion.

A sample of the dispersion obtained as aforedescribed was oven dried at 100°C for 12 hours until the solvent was completely evaporated. The powder thus obtained was then analysed by XRD using a Philips X'Pert PRO diffractometer, in order to understand its crystalline structure.

### EXAMPLE 4

### Application of nanoparticulate dispersion of TiO₂ in water/diethylene glycol onto fabric

25 ml of deionised water were added to 75 ml of the dispersion prepared as aforedescribed in example 1 and the dispersion thus diluted was placed in a bowl. A 20 cm x 60 cm strip of cotton fabric was immersed in the bowl for 10 seconds, then removed and passed between two rollers of silicone material to remove excess solvents. The fabric was then oven dried, washed in a washing machine, dried again and the UV ray protection factor (UPF) offered by the coated fabric was measured with the standard spectrophotometric methods for this type of measurement, a UPF of 35.40 being found.

### EXAMPLE 5

### Application of nanoparticulate dispersion of TiO₂ in water/diethylene glycol onto wool

25 ml of deionised water were added to 75 ml of the dispersion prepared as aforedescribed in example 1 and the dispersion thus diluted was placed in a bowl. A 20 cm x 60 cm strip of wool fabric was immersed in the bowl for 10 seconds, then removed and passed between two rollers of silicone material to remove excess solvents. The fabric was then oven dried, washed in a washing machine and dried again. Onto this wood fabric was tested antibacterial properties in observance of rule AATCC TM 100:99. In the following table are reported the results of tests.

| | Percentage of put down of microbial strain | | |
|---|---|---|---|
| Sample | Staphylococcus aureus | Bacillus subtilis | Aspergillus niger |
| Pure wood | 0 | 0 | 77.60 |
| Wood treated with Titanium Dioxide | >99.94 | 99.60 | 99.47 |

### EXAMPLE 6

### Application of nanoparticulate dispersion of TiO₂ in water/diethylene glycol onto a Cotton wire

25 ml of deionised water were added to 75 ml of the dispersion prepared as aforedescribed in example 1 and the dispersion thus diluted was placed in a bowl.

A cotton wire was immersed in the bowl, dried in a oven and rolled onto a spool. With this wire was obtained a knitted fabric and was tested the UV ray protection factor (UPF) offered by the coated fabric. This properties was measured with the standard spectrophotometric methods and a UPF of 30.20 being found.

### EXAMPLE 7

### Application of nanoparticulate dispersion of TiO₂ in water/diethylene glycol onto ceramic surfaces - studies of adherence and resistance to high temperatures

The nanoparticulate dispersion prepared as aforedescribed in example 1 was used to create a photocatalytic coating on an unglazed gres support, adding 5% by weight of a low melting frit, to facilitate adherence of the titanium dioxide to the support. The frit used had a relatively low hemisphere temperature, equal to 700°C, and the following chemical composition:

| | | | |
|---|---|---|---|
| SiO₂ | 48.32 % | CaO | 6.95 % |
| Al₂O₃ | 2.22 % | MgO X | 6.95 % |
| K₂O | 0.049 % | Li₂O | 13.9 % |
| Na₂O | 0.06 % | ZnO | 4.05 % |
| B₂O₃ | 22.55 % | | |

The dispersion of example 1 was applied by dip-coating to the support, which was subjected to thermic cycles at both 700°C and 600°C. After the firing treatment the support maintained its original appearance and demonstrated good adhesion between coating and substrate.

The behaviour of the present coating at high temperatures was studied by high temperature powder diffractometry (XRD-HT). It was thus observed that the phase transition from anatase to rutile begins at only about 800°C, arriving at completion at about 900°C. By applying Sherrer's formula, the nanocrystal dimensions at the various temperatures was also calculated.

Table 1 below gives the 2θ angle at which the measurement was taken, the width of the peak at half height which when inserted in Sherrer's formula serves to calculate the crystallite dimensions, the crystallite dimensions and the temperature relative to the preceding dimensions.

**Table 1**

| Crystalline phase | 2θ angle | FHWD | dimensions (nm) | T (°C) |
|---|---|---|---|---|
| anatase | 25.04 | 1.3354 | 60.9 | 300 |
| anatase | 25.11 | 1.2553 | 64.8 | 400 |
| anatase | 25.10 | 1.1532 | 70.6 | 500 |
| anatase | 25.05 | 0.9405 | 86.5 | 600 |
| anatase | 25.05 | 0.4045 | 201.2 | 700 |
| anatase | 25.03 | 0.2614 | 311.3 | 800 |
| anatase | 25.02 | 0.1935 | 420.5 | 900 |
| rutile | 27.10 | 0.1401 | 583.3 | 900 |
| rutile | 27.08 | 0.137 | 596.4 | 1000 |

The same method was used to evaluate increase in crystallite size at a constantly maintained frit firing temperature but at differing times, and in this case good coating adherence was found even for prolonged firing times, the crystallite size increasing over time but to an acceptable extent such as not to reduce the photocatalytic effectiveness of the coating.

To verify the adherence of the coating to the substrate the entire sample was subjected to ultrasound cycles in ethanol and in acetone for different times (5 and 60 minutes) and to repeated washings with cloths of different abrasiveness (sponging). After every ultrasound cycle an XRD analysis was carried out to verify any reduction in the amount of anatase present in the coating, finding however that the treatments carried out have not influenced either the crystalline form of TiO₂ or adherence of the coating to the support.

### EXAMPLE 8

### Application of nanoparticulate dispersion of TiO₂ in water/diethylene glycol onto ceramic surfaces - Photocatalytic effect

Two samples of the same gres, glazed in white, were "stained" with the same quantity of a solution containing 10 ppm of methylene blue. Only one of the two samples had previously been coated with the dispersion of the invention as described in example 4.

The two samples were then exposed to light from a UV lamp for various periods of time: 10, 30, 60, 90 and 120 minutes. While on the untreated sample no change in the methylene blue stain was observed, a progressive disappearance of the blue stain was observed for the sample covered with the dispersions of the invention. The same experiment was repeated with a indelible marker stain, only observing disappearance of the stain on the coated sample after 45 minutes' exposure to UV light.

The two above experiments were repeated in sunlight instead of with a UV lamp, and the same results were obtained.

### EXAMPLE 9

### Application of nanoparticulate dispersion of TiO₂ in water/diethylene glycol onto glass.

The dispersion of example 1 was applied by dip-coating or spray to the support, which was subjected to thermic cycles for 30 minutes at 200°C and for 30 minutes at 500°C. After the firing treatment the support maintained its original appearance and demonstrated good adhesion between coating and substrate.

This sample was "stained" with a solution containing 10 ppm of methylene blue. The sample was then exposed to light from a UV lamp and a progressive disappearance of the blue stain was observed. This experiments was repeated in sunlight instead of with a UV lamp, and the same result was obtained.

### EXAMPLE 10

### Application of nanoparticulate dispersion of TiO₂ in water/diethylene glycol onto glass-ceramic surface.

The dispersion of example 1 was applied by dip-coating or spray to the support, which was subjected to thermic cycles for 30 minutes at 200°C and for 30 minutes at 700°C. After the firing treatment the support maintained its original appearance and demonstrated good adhesion between coating and substrate.

This sample was "stained" with a solution containing 10 ppm of methylene blue. The sample was then exposed to light from a UV lamp and a progressive disappearance of the blue stain was observed. This experiments was repeated in sunlight instead of with a UV lamp, and the same result was obtained.

### EXAMPLE 11

### Application of nanoparticulate dispersion of TiO₂ in water/diethylene glycol onto various surface (glass, glass-ceramic, glaze, body gres).

At the dispersion of example 1 was added 0.01 to 10% of surfactant as for example a non ionic surfactant (such as Triton X-100) to improve the spreading onto the surface. This solution was applied by dip-coating or spray to the support, which was subjected to thermic cycles for 30 minutes at 200°C and for 30 minutes at 500°C for glass or 700°C for glass-ceramics, glaze and body gres. After the firing treatment the support maintained its original appearance and demonstrated good adhesion between coating and substrate.

This sample was "stained" with a solution containing 10 ppm of methylene blue. The sample was then exposed to light from a UV lamp and a progressive disappearance of the blue stain was observed. This experiments was repeated in sunlight instead of with a UV lamp, and the same result was obtained.

### EXAMPLE 12

### Application of nanoparticulate dispersion of TiO₂ in water onto ceramic composite obtained with inorganic material and a polyester resin.

50 ml of deionised water were added to 50 ml of the dispersion prepared as aforedescribed in example 1 bis and the dispersion thus diluted was placed in a spray gun. This sample was sprayed onto surface of composite material and after was kept at 100°C for 1 hour.

This sample was "stained" with a solution containing 10 ppm of methylene blue. The sample was then exposed to light from a UV lamp and a progressive disappearance of the blue stain was observed. This experiments was repeated in sunlight instead of with a UV lamp, and the same result was obtained.

## Claims

1. Process for preparing nanoparticulate dispersions of anatase TiO₂ in a mixture of water and a suitable complexing solvent comprising the following steps:
i) reacting a titanium alkoxide with a suitable complexing solvent;
ii) distilling the solution derived from step i);
iii) adding, under acidic conditions, water to the solution derived from step ii) together with said complexing solvent and one or more polycondensation inhibitors, then heating the reaction mixture under reflux to obtain the desired nanoparticulate dispersion.

2. Process as claimed in claim 1, wherein said complexing solvent is a polyethylene glycol.

3. Process as claimed in claim 2, wherein said complexing solvent is diethylene glycol.

4. Process as claimed in claim 1, wherein said titanium alkoxide is chosen from the group consisting of titanium methoxide, ethoxide, normal-propoxide, isopropoxide, normal-butoxide, and isobutoxide.

5. Process as claimed in claim 4, wherein said titanium alkoxide is titanium isopropoxide.

6. Process as claimed in claim 1, wherein said polycondensation inhibitor is a mixture comprising at least one mineral acid and one organic acid.

7. Process as claimed in claims 1 and 6, wherein the quantity of polycondensation inhibitor added in step iii) is such that the quantity of the mineral acid is between 0.1 and 10% by volume on the total volume of the reaction mixture, while the quantity of the organic acid is between 1 and 20% by volume on the total volume of the reaction mixture.

8. Process as claimed in claim 6, wherein said mineral acid is chosen from the group consisting of hydrochloric acid, nitric acid, sulfuric acid, perchloric acid, hydrobromic acid, and hydriodic acid, said organic acid being acetic acid.

9. Process as claimed in claim 6, wherein said polycondensation inhibitor is a mixture of hydrochloric acid and acetic acid.

10. Process as claimed in claim 1, wherein the molar ratio of said titanium alkoxide to said complexing solvent is 1:3.

11. Process as claimed in claim 1, also comprising the addition of a salt of metals of the first or second transition group to step i) or alternatively to step iii).

12. Process as claimed in claim 11, wherein said first or second transition group metals are chosen from Ag, Cu and Ce.

13. Nanoparticulate dispersions of anatase TiO₂ in a mixture of water and a suitable complexing solvent, obtainable with the process as defined in claims 1-12.

14. Dispersions as claimed in claim 13, wherein said complexing solvent is a polyethylene glycol.

15. Dispersions as claimed in claim 14, wherein said complexing solvent is diethylene glycol.

16. Use of nanoparticulate dispersions of TiO₂ as defined in claims 13-15 for preparing photocatalytic coatings on surfaces which require said treatment.

17. Use as claimed in claim 16 wherein said photocatalytic coatings comprise a surfactant.

18. Use according to Claim 17 wherein said surfactant is a non ionic surfactant.

19. Use according to claim 18 wherein such non ionic surfactant is Triton x 100.

20. Use as claimed in claims 16 - 19 , wherein said surfaces are chosen from the surfaces of textile, metallic, ceramic products, and glazes.

21. Use of nanoparticulate dispersions of TiO₂ as defined in claims 13-15 for photocatalytic decontamination of gas and liquids.

22. Use of nanoparticulate dispersions of TiO₂ as defined in claims 13-15 for preparing cosmetic formulations with high protection of the skin against the sun.

## Patentansprüche

1. Prozess zum Herstellen von Nanopartikeldispersionen aus Anatas-TiO₂ in einem Gemisch aus Wasser und einem geeigneten komplexierenden Lösemittel, mit den folgenden Schritten:
i) Reagieren eines Titanalkoxids mit einem geeigneten komplexierenden Lösemittel;
ii) Destillieren der von Schritt i) abgeleiteten Lösung;
iii) Zusatz von Wasser zu der von Schritt ii) abgeleiteten Lösung unter sauren Bedingungen zusammen mit dem komplexierenden Lösemittel und einem oder mehreren Polykondensationsinhibitoren, dann Erhitzen des Reaktionsgemisches unter Rückfluss, um die gewünschte Nanopartikeldispersion zu erhalten.

2. Prozess nach Anspruch 1,
wobei das komplexierende Lösemittel ein Polyethylenglykol ist.

3. Prozess nach Anspruch 2,
wobei das komplexierende Lösemittel Diethylenglykol ist.

4. Prozess nach Anspruch 1,
wobei das Titanalkoxid aus der Gruppe gewählt ist, die Titanmethoxid, Ethoxid, Normal-Propoxid, Isopropoxid, Normal-Butoxid und Isobutoxid umfasst.

5. Prozess nach Anspruch 4,
wobei das Titanalkoxid Titanisopropoxid ist.

6. Prozess nach Anspruch 1,
wobei der Polykondensationsinhibitor ein Gemisch ist, das zumindest eine mineralische Säure und eine organische Säure umfasst.

7. Prozess nach einem der Ansprüche 1 und 6,
wobei die bei Schritt iii) hinzugesetzte Menge an Polykondensationsinhibitor so ist, dass die Menge der mineralischen Säure zwischen 0,1 und 10 Vol.-% bezüglich des Gesamtvolumens des Reaktionsgemisches ausmacht, während die Menge der organischen Säure zwischen 1 und 20 Vol.-% bezüglich des Gesamtvolumens des Reaktionsgemisches ausmacht.

8. Prozess nach Anspruch 6,
wobei die mineralische Säure aus der Gruppe gewählt ist, die Chlorwasserstoffsäure, Salpetersäure, Schwefelsäure, Perchlorsäure, Bromwasserstoffsäure und Iodwasserstoffsäure umfasst, wobei die organische Säure Essigsäure ist.

9. Prozess nach Anspruch 6,
wobei der Polykondensationsinhibitor ein Gemisch aus Chlorwasserstoffsäure und Essigsäure ist.

10. Prozess nach Anspruch 1,
wobei das Molverhältnis des Titanalkoxids zu dem komplexierenden Lösemittel 1:3 ist.

11. Prozess nach Anspruch 1, auch mit dem Zusatz eines Salzes aus Metallen der ersten oder zweiten Übergangsgruppe zu Schritt i) oder alternativ zu Schritt iii).

12. Prozess nach Anspruch 11,
wobei die Metalle der ersten oder zweiten Übergangsgruppe aus Ag, Cu und Ce gewählt sind.

13. Nanopartikeldispersionen aus Anatas-TiO₂ in einem Gemisch aus Wasser und einem geeigneten komplexierenden Lösemittel, die mit dem Prozess erhaltbar sind, wie in den Ansprüchen 1 bis 12 definiert ist.

14. Dispersionen nach Anspruch 13,
wobei das komplexierende Lösemittel ein Polyethylenglykol ist.

15. Dispersionen nach Anspruch 14,
wobei das komplexierende Lösemittel Diethylenglykol ist.

16. Verwendung von Nanopartikeldispersionen aus TiO₂, wie in den Ansprüchen 13 bis 15 definiert ist, zur Herstellung photokatalytischer Beschichtungen auf Oberflächen, die die Behandlung erfordern.

17. Verwendung nach Anspruch 16,
wobei die photokatalytischen Beschichtungen einen oberflächenaktiven Stoff umfassen.

18. Verwendung nach Anspruch 17,
wobei der oberflächenaktive Stoff ein nichtionischer oberflächenaktiver Stoff ist.

19. Verwendung nach Anspruch 18,
wobei ein derartiger nichtionischer oberflächenaktiver Stoff Triton X 100 ist.

20. Verwendung nach einem der Ansprüche 16 bis 19,
wobei die Oberflächen aus den Oberflächen aus Textil-, Metall-, Keramik-Produkten und -Überzügen gewählt sind.

21. Verwendung von Nanopartikeldispersionen aus TiO₂, wie in den Ansprüchen 13 bis 15 definiert ist, zur photokatalytischen Dekontamination von Gas und Flüssigkeiten.

22. Verwendung von Nanopartikeldispersionen aus TiO₂, wie in den Ansprüchen 13 bis 15 definiert ist, zur Herstellung kosmetischer Formulierungen mit hohem Schutz der Haut gegenüber der Sonne.

## Revendications

1. Procédé de préparation de dispersions de nanoparticules de TiO₂ anatase dans un mélange contenant de l'eau et un solvant complexant approprié, comprenant les étapes suivantes :
i) la réaction d'un alcoxyde de titane avec un solvant complexant approprié ;
ii) la distillation de la solution obtenue dans l'étape i) ;
iii) l'ajout d'eau, dans des conditions acides, à la solution obtenue dans l'étape ii) conjointement avec ledit solvant complexant et un ou plusieurs inhibiteurs de polycondensation, puis le chauffage du mélange réactionnel à reflux pour obtenir la dispersion de nanoparticules souhaitée.

2. Procédé selon la revendication 1, dans lequel ledit solvant complexant est un polyéthylène glycol.

3. Procédé selon la revendication 2, dans lequel ledit solvant complexant est le diéthylène glycol.

4. Procédé selon la revendication 1, dans lequel ledit alcoxyde de titane est choisi dans le groupe constitué du méthoxyde de titane, de l'éthoxyde de titane, du n-propoxyde de titane, de l'isopropoxyde de titane, du n-butoxyde de titane et de l'isobutoxyde de titane.

5. Procédé selon la revendication 4, dans lequel ledit alcoxyde de titane est l'isopropoxyde de titane.

6. Procédé selon la revendication 1, dans lequel ledit inhibiteur de polycondensation est un mélange contenant au moins un acide minéral et un acide organique.

7. Procédé selon les revendications 1 et 6, dans lequel la quantité d'inhibiteur de polycondensation ajoutée dans l'étape iii) est telle que la quantité d'acide minéral est située entre 0,1 % et 10 % en volume par rapport au volume total du mélange réactionnel, tandis que la quantité d'acide organique est située entre 1 % et 20 % en volume par rapport au volume total du mélange réactionnel.

8. Procédé selon la revendication 6, dans lequel ledit acide minéral est choisi dans le groupe constitué de l'acide chlorhydrique, de l'acide nitrique, de l'acide sulfurique, de l'acide perchlorique, de l'acide bromhydrique et de l'acide iodohydrique, ledit acide organique étant l'acide acétique.

9. Procédé selon la revendication 6, dans lequel ledit inhibiteur de polycondensation est un mélange contenant de l'acide chlorhydrique et de l'acide acétique.

10. Procédé selon la revendication 1, dans lequel le rapport molaire entre ledit alcoxyde de titane et ledit solvant complexant est de 1:3.

11. Procédé selon la revendication 1, comprenant en outre l'ajout d'un sel de métaux appartenant au premier ou au second groupe de transition à l'étape i) ou, en variante, à l'étape iii).

12. Procédé selon la revendication 11, dans lequel lesdits métaux appartenant au premier ou au second groupe de transition sont choisis parmi Ag, Cu et Ce.

13. Dispersions de nanoparticules de TiO₂ anatase dans un mélange contenant de l'eau et un solvant complexant approprié, pouvant être obtenues avec le procédé défini dans les revendications 1 à 12.

14. Dispersions selon la revendication 13, dans lesquelles ledit solvant complexant est un polyéthylène glycol.

15. Dispersions selon la revendication 14, dans lesquelles ledit solvant complexant est le diéthylène glycol.

16. Utilisation de dispersions de nanoparticules de TiO₂ telles que définies dans les revendications 13 à 15, pour la préparation de revêtements photocatalytiques sur des surfaces qui ont besoin dudit traitement.

17. Utilisation selon la revendication 16, dans laquelle lesdits revêtements photocatalytiques comprennent un tensioactif.

18. Utilisation selon la revendication 17, dans laquelle ledit tensioactif est un tensioactif non ionique.

19. Utilisation selon la revendication 18, dans laquelle le tensioactif non ionique est le Triton X 100.

20. Utilisation selon l'une quelconque des revendications 16 à 19, dans laquelle lesdites surfaces sont choisies parmi les surfaces de textiles, métalliques, de produits céramiques et de vernis.

21. Utilisation de dispersions de nanoparticules de TiO₂ telles que définies dans les revendications 13 à 15, pour la décontamination photocatalytique des gaz et des liquides.

22. Utilisation de dispersions de nanoparticules de TiO₂ telles que définies dans les revendications 13 à 15, pour la préparation de formules cosmétiques à pouvoir protecteur élevé de la peau contre le soleil.
